# EUROPÄISCHE PATENTSCHRIFT

(11) **EP 3 368 958 B1**
(45) Veröffentlichungstag und Bekanntmachung des Hinweises auf die Patenterteilung: **02.09.2020**
(21) Anmeldenummer: 16788500.3
(22) Anmeldetag: 27.10.2016
(51) Int. Cl.: G05G 1/08, G06F 3/01

(54) **BEDIENANORDNUNG AUS BETÄTIGUNGSTEIL MIT EINGABEFLÄCHE UND AUF DER EINGABEFLÄCHE ANGEORDNETEM DREHSTELLER**
CONTROL ARRANGEMENT CONSISTING OF AN ACTUATING ELEMENT WITH AN INPUT SURFACE AND ROTARY ACTUATOR ARRANGED ON SAID INPUT SURFACE
DISPOSITIF DE COMMANDE COMPOSÉ D'UNE PIÈCE D'ACTIONNEMENT AYANT UNE SURFACE D'ENTRÉE ET UN ACTUATEUR ROTATIF DISPOSÉ SUR LA SURFACE D'ENTRÉE

(30) Priorität: 30.10.2015 DE 102015118587
(43) Veröffentlichungstag der Anmeldung: 05.09.2018
(73) Patentinhaber: Preh GmbH, 97616 Bad Neustadt a. d. Saale (DE)
(72) Erfinder: KLEIN, Markus, 97616 Salz (DE); SCHUBERT, Michael, Coburg 96450 (DE); SCHMIDT, Benedikt, 97650 Fladungen (DE)
(74) Vertreter: Lohmanns, Bernard
(86) Internationale Anmeldenummer: PCT/EP2016/075931
(87) Internationale Veröffentlichungsnummer: WO 2017/072232

(56) Entgegenhaltungen:
- DE-A1-102009 006 260
- US-A1- 2008 238 879
- US-A1- 2014 042 004

## Beschreibung

Die Erfindung betrifft eine Bedienanordnung nach dem Oberbegriff des Anspruchs 1 aus einem Träger, einem gegenüber dem Träger beweglich gelagerten Betätigungsteil, welches eine Eingabefläche definiert, Mitteln zur Berührdetektion auf der Eingabefläche, wenigstens einem auf der Eingabefläche angeordneten und relativ zur Eingebfläche drehbeweglich gelagerten Drehsteller.

Bedienanordnungen, die ein eine Eingabefläche definierendes Betätigungsteil samt Mittel zur Berührdetektion auf der Eingabefläche aufweisen, sind beispielsweise als Touchpad oder, sofern die Eingabefläche mit einer Anzeigefläche deckungsgleich ist, als Touchscreen bekannt. Aufgrund der Vielfältigkeit der mit solchen Bedienanordnungen möglichen Eingabemöglichkeiten und insbesondere aufgrund der Möglichkeit, eine koordinatenbezogene Eingabe und Steuerung zu ermöglichen, werden solche Bedienanordungen zunehmend und vielfältig eingesetzt. Aufgrund der im Allgemeinen ebenen und homogenen Ausgestaltung dieser Eingabeflächen fehlt es oft an einem haptischen Feedback, welches die Bedienung erleichtert, wenn wie beispielsweise im Fahrzeug eine visuelle Kontrolle während der Eingabe nicht möglich ist. Daher besteht grundsätzlich aus Gründen des besseren haptischen Feedbacks immer noch Bedarf nach klassischen Eingabegeräten wie Tastern, Wippschaltern und insbesondere Drehstellern. Aufgrund der zunehmenden Größe der Eingabefläche von Touchscreens bzw. Touchpads bei gleichzeitiger Kostenminimierung besteht somit die Möglichkeit, einen Drehsteller konstruktiv in das Touchpad bzw. den Touchscreen zu integrieren, wobei bevorzugt die touchpad- oder touchscreenseitigen Mittel zur Berührdetektion für die Stellungsdetektion des Drehstellers herangezogen werden. Hierbei besteht aber das Problem das eine Betätigung des Drehstellers ebenfalls zuverlässig detektiert werden soll. DE 10 2009 006 260 A1 offenbart eine gattungsgemäße Bedienanordnung und ein gattungsgemäßes Auswerteverfahren.

Vor diesem Hintergrund bestand Bedarf nach einer Lösung, bei der eine gattungsgemäße Bedienanordnung, beispielsweise als Kombination aus Drehsteller und Touchpad bzw. Touchscreen, zuverlässig detektiert werden kann und insbesondere diesem Dehsteller auch eine Drückfunktionalität zugeordnet werden kann. Diese Aufgabe wird durch eine Bedienanordnung gemäß Anspruch 1 gelöst. Eine gleichermaßen vorteilhafte Verwendung ist Gegenstand des Verwendungsanspruchs, ein gleichermaßen vorteilhaftes Auswertverfahren ist Gegenstand des nebengeordneten Verfahrensanspruchs. Vorteilhafte Ausgestaltungen sind jeweils Gegenstand der abhängigen Ansprüche. Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft eine Bedienanordnung aus einem Träger und einem gegenüber dem Träger beweglich gelagerten Betätigungsteil. Die Lagerung ist ferner ausgelegt in eine Ruhelage, eine unbetätigte Ruhestellung zu bewirken. Das Betätigungsteil definiert eine Eingabefläche und es sind ferner Mittel zur Berührdetektion auf der Eingabefläche, die wenigstens teilweise integratives Bestandteil des Betätigungsteils sind, vorgesehen, nachfolgend werden diese auch als Berührsensorik bezeichnet. Die Eingabefläche ist beispielsweise aber nicht zwingend eben. Das Betätigungsteil ist bevorzugt wenigstens in der zur Eingabefläche senkrechten Richtung beweglich gelagert.

Erfindungsgemäß ist wenigstens ein auf der Eingabefläche und damit auf dem Betätigungsteil angeordneter und relativ zur Eingabefläche drehbeweglich gelagerter Drehsteller vorgesehen. Unter einem Drehsteller wird beispielsweise ein Eingabegerät mit einem Betätigungsknopf oder Betätigungsring, der um eine zur Eingabefläche im Wesentlichen senkrechte Achse drehbeweglich gelagert ist, verstanden, wobei der Verstellweg des Betätigungsrings oder Betätigungsknopfs unbegrenzt oder beanschlagt sein kann.

Erfindungsgemäß ist ferner eine Matrix von Kraftsensoren zwischen dem Träger und dem Betätigungsteil zur Messung einer auf das Betätigungsteil wirkenden Betätigungskraft vorgesehen, welche nachfolgend auch kurz als Betätigungskraftsensorik oder kurz als Kraftsensorik bezeichnet wird. Als erfindungsgemäße Matrix wird eine Anordnung von zwei oder mehr Kraftsensoren verstanden. Als eine erfindungsgemäße Matrix von Kraftsensoren wird beispielsweise aber nicht zwingend eine Anordnung von mehr als zwei Sensoren in einer gemeinsamen Ebene verstanden. Hinsichtlich des die Kraftsensoren betreffenden Messprinzips ist die erfindungsgemäße Bedienanordnung nicht eingeschränkt und erfindungsgemäß umfasst sind beispielsweise piezoelektrisch oder kapazitiv oder induktiv oder resitiv messende Kraftsensoren.

Erfindungsgemäß ist ferner eine Auswerteinheit vorgesehen, die ausgelegt ist, aus dem von den Mitteln zur Berührdetektion gewonnen Signal eine Ortsbestimmung einer auf der Eingabefläche erfolgten Berührung durchzuführen und anhand der Signale der Matrix von Kraftsensoren beispielsweise durch Vergleich mit vorgegebenen Werten oder einer Differenz der Signale verschiedener Sensoren der Matrix wenigstens eine Betätigungskrafteinwirkung auf den Drehsteller zu identifizieren. Beispielsweise wird anhand einer ausschließlichen durch die Kraftsensoren detektierten Betätigungskrafteinwirkung auf das Betätigungsteil ohne dass eine Berührung der Eingabefläche oder zumindest in dem von dem oder den Drehstellern nicht abgedeckten Bereich der Eingabefläche detektiert wird, eine Berührung und Betätigung des Drehstellers identifiziert. Die Kraftsensoren sind beispielsweise so angeordnet, dass sie eine Krafteinwirkung detektieren, die in Richtung des sich durch die Lagerung des Betätigungsteils sich ergebenden Freiheitsgrades erfolgt. Bevorzugt sind die Kraftsensoren so ausgerichtet, dass sie im Wesentlichen eine zur Eingabefläche senkrechte Komponente der Betätigungskrafteinwirkung detektieren.

Als Betätigung des Drehstellers wird eine solche verstanden, die mit einer von der Matrix von Kraftsensoren detektierbaren Krafteinwirkung einhergeht. Durch die Identifikation dieser Krafteinwirkung ergeben sich mehrere erfindungsgemäße Vorteile, beispielsweise lässt sich somit aufgrund der erfindungsgemäßen Mindestübereinstimmung in der Krafteinwirkung bei einer gleichzeitigen oder nachfolgenden Verstellung des Drehstellers zuverlässiger eine beabsichtigte von einer unbeabsichtigten Verstellung des Drehstellers unterscheiden. Als beabsichtigte Verstellung wird eine solche Einwirkung auf den Drehsteller durch den Bediener verstanden, die das bewusste Erreichen einer Stellungsänderung des Betätigungsteils (Ring oder Knopf) des Drehstellers zum Ziel hat und was erfindungsgemäß als Betätigung im Sinne der Erfindung verstanden wird. Es hat sich gezeigt, dass solche durch Betätigung bewirkte Einwirkungen anhand eines durch eine Matrix von wenigen Kraftsensoren definierten Kraftmusters leicht und zuverlässig detektierbar sind und zuverlässig von anderen Krafteinwirkungen, die ungewollt und zufällig sind, unterscheidbar sind. Dadurch kann die durch eine Betätigung bewirkte Verstellung des Drehstellers verifiziert werden und die Zuverlässigkeit der Stellungsauswertung des Drehstellers gesteigert werden.

Darüber hinaus dient gemäß einer erfindungsgemäßen Ausgestaltung die positive Detektion einer Betätigungskrafteinwirkung auf den Drehsteller vorteilhaft dem Drehsteller neben der Drehverstellung eine neue von der Betätigungskraft, beispielsweise von der Richtung und/oder dem Betrag der durch die Matrix der Kraftsensoren gemessenen Betätigungskraft, abhängige Schaltfunktionalität oder Steuerfunktionalität bereitzustellen. Beispielsweise ist vorgesehen, bei einer Betätigungskraft, die in einer zur Achse der Drehverstellung senkrechten Richtung erfolgt, dem Drehsteller eine zusätzliche Schaltfunktion oder Steuerfunktion zuzuordnen. Beispielsweise sind vier zueinander und zur Achse der Drehverstellung orthogonale Richtungen der Betätigungskraft jeweils eine Schaltfunktion oder Steuerfunktion zugeordnet, um dem Drehversteller neben der Drehfunktionalität beispielsweise die Funktionalität eines Joysticks zu verleihen. In einer anderen Ausgestaltung ist vorgesehen, dass bei einer Betätigungskraft, die in einer zur Achse der Drehverstellung parallelen Richtung erfolgt, dem Drehsteller eine zusätzliche Schaltfunktion oder Steuerfunktion zuzuordnen. Beispielsweise wird dem Drehsteller so eine zusätzliche Drückfunktionalität ("Push"-Funktionalität) verliehen. Es obliegt dem Fachmann, eine geeignete Anordnung der Matrix von Kraftsensoren sowie Anzahl von Kraftsensoren sowie geeignete Schwellenwerte bei der Auswertung der gemessenen Betätigungskraft zu wählen, um eine zuverlässige Detektion für die zusätzliche Schalt- bzw. Steuerfunktion zu gewährleisten.

Gemäß einer bevorzugten Ausgestaltung sind die Mittel zur Berührdetektion ausgelegt, eine Berührung kapazitiv und/oder resistiv zu detektieren. Beispielsweise ist der Eingabefläche eine Elektrodenstruktur aus mehreren Elektroden zur Erzeugung von Messkapazitäten zugeordnet, um eine in etwa der Größe der Elektroden entsprechende ortsauflösende Detektion einer durch die Berührung der Eingabefläche bewirkten Kapazitätsänderung zu detektieren.

Bevorzugt sind die Mittel zur Berührdetektion ferner ausgelegt, eine Annäherung und/oder Berührung des Drehstellers zu detektieren. Dies ist in einer Ausgestaltung vorgesehen, um die Kraftmessung durch die Matrix von Kraftsensoren zu aktivieren. In einer anderen Ausgestaltung wird dadurch die durch die Betätigungskraftmessung identifizierte Betätigung des Drehstellers verifiziert. Darüber hinaus besteht somit die Möglichkeit, eine Vorschau der mit dem Drehsteller bereitgestellten Funktionalität auf einer Anzeige bereitzustellen, bevor beispielsweise die eigentliche die Funktion auslösende Betätigung, beispielsweise das Verstellen, durchgeführt wird. Beispielsweise wird bei Annäherung oder spätestens bei Berührung des Drehstellers auf einer unter der Eingabefläche angeordneten Anzeige eine den Drehsteller umgebende und für die mit der Verstellung verbundene Funktion relevante Skala eingeblendet.

Noch bevorzugter sind die die Mittel zur Berührdetektion ausgelegt, eine orts- oder zumindest bereichsauflösende Detektion der Berührung des Drehstellers zu ermöglichen. Beispielsweise definiert eine Oberfläche des Drehstellers, beispielsweise die dem Bediener zugewandte Oberfläche mehrere spezifische Berührbereiche, deren Berührung unabhängig voneinander detektiert wird. Beispielsweise sind die Berührbereiche mit einer Geberelektrode elektrisch leitend verbunden, die bei Berührung die jeweilige Messkapazität der Eingabefläche beeinflusst um so eine Detektion durch die Mittel zur Berührdetektion zu ermöglichen. Durch die bereichsgenaue Auflösung kann die Qualität der Verifizierung verbessert werden, indem beispielsweise die Betätigungskraftrichtung mit dem spezifischen Berührbereich verifiziert werden kann.

Gemäß einer weiteren Ausgestaltung weist die erfindungsgemäße Bedienanordnung ferner einen Aktor zur Stoß- oder Schwingungsanregung des Betätigungsteils relativ zu dem Träger auf, um ein haptisches Feedback für den Bediener zu erzeugen. Beispielsweise ist ein piezoelektrischer oder elektromagnetischer Aktor vorgesehen. Insbesondere erfolgt ein haptisches Feedback, wenn eine Betätigungskrafteinwirkung auf den Drehsteller positiv identifiziert wird. Der Aktor ist beispielsweise so ausgelegt, dass die durch ihn bewirkte Stoß- oder Schwingungsanregung in einer zur Eingabefläche senkrechten Richtung erfolgt, oder die Richtung der Stoß- oder Schwingungsanregung die Eingabefläche in einem spitzen Winkel schneidet. Bevorzugt erfolgt die Stoß- oder Schwingungsanregung in einer durch den Schwerpunkt des Betätigungsteils gehenden Richtung. Bevorzugt ist der Aktor ausgelegt, eine Stoß- oder Schwingungsanregung in einer zur Eingabefläche parallelen Richtung zu bewirken.

Gemäß einer weiteren Ausgestaltung ist die Auswerteinheit ausgelegt, die Berührdetektion, d.h. Detektion einer Berührung auf der Eingabefläche aufgrund des Signals der Mittel zur Berührdetektion mit Hilfe der Signale der Matrix von Kraftsensoren zu verifizieren und/oder umgekehrt. Dies kann beispielsweise zur Verifizierung der Berührung an sich aber je nach Auflösungsvermögen der durch die Matrix von Kraftsensoren definierten Kraftsensorik auch die Verifizierung des Ortes der Berührung betreffen. Umgekehrt ist beispielsweise in einer Ausgestaltung möglich bei einer Detektion einer Krafteinwirkung auf den Drehsteller und Ausbleiben einer Berührung zumindest in bestimmten Bereichen der Eingabefläche eine Betätigung des Drehstellers zu verifizieren. Umgekehrt kann durch eine Detektion einer Berührung in dem den Drehsteller unmittelbar umgebenden Bereich, beispielsweise in Breite einer Fingerdicke, der Verifizierung der Berührung und/oder Betätigung des Drehstellers verifizieren, weil diese Berührung nur einer Berührung des Drehstellers mit einer den Betätigungsring oder Betätigungsknopf greifenden Fingerstellung und eben nicht einer zufälligen Berührung zugeordnet werden kann.

Bevorzugt sind die Mittel zur Berührdetektion auch ausgelegt, eine Stellung und/oder Verstellung des Drehstellers zu detektieren. Beispielsweise ist eine die Berührfläche berührender oder nahezu berührender, die jeweilige Messkapazität beinflussender und damit einen menschlichen Finger ersetzender und sich mit dem Betätigungsring oder Betätigungsknopf synchron drehender Stellungsgeber vorgesehen. Beispielsweise erstrecken sich die Mittel zur Berührdetektion zwischen dem Drehsteller und dem Betätigungsteil.

Gemäß einer weiteren bevorzugten Ausgestaltung der erfindungsgemäßen Bedienanordnung weist diese ferner eine Anzeige (Display) auf und die Auswerteinheit ist ausgelegt, einen Anzeigeinhalt im Falle einer Identifikation einer Betätigungskrafteinwirkung auf den Drehsteller zu wechseln. Dadurch wird beispielsweise ein optisches Feedback bereitgestellt. Bevorzugt ist die Anzeige Bestandteil des Betätigungsteils. Die Anzeige ist beispielsweise vom Bediener ausgesehen unter der Eingabefläche angeordnet.

Gemäß einer bevorzugten Variante weist das Betätigungsteil eine äußere die Eingabefläche definierende Schicht auf, die mit einem Sockel des Drehstellers einstückig ausgebildet ist oder mit dem Sockel kraftschlüssig und/oder stoffschlüssig und/oder formschlüssig verbunden ist. Gemäß einer bevorzugten Ausgestaltung ist diese, bevorzugt transparente, Schicht eine Glasschicht, bevorzugt eine Glasschicht mit einem thermischen Längenausdehnungskoeffizienten bei 20° zwischen 3,2 und 8,7 x 10-6/K, noch bevozugter aus Borosilikatglas, Aluminiumsilikatglas oder Kalk-Natron-Floatgas. Solche Glasschichten lassen sich leicht in einem formgebenden Verfahren durch Erwärmen der Glasschicht über die Transformationstemperatur in einem formgebenden Verfahren bearbeiten. Eine solche Glasschicht weist ferner eine hohe Festigkeit und eine als besonders vorteilhaft empfundene Haptik auf. Beispielsweise beträgt die Dicke der Schicht 0,5 mm bis 2,0 mm, wie 1,1 mm. Der Sockel ist beispielsweise mit der die Eingabefläche definierenden Schicht verklebt oder verrastet. Als Sockel wird beispielsweise der bei der Drehverstellung des Betätigungsrings oder -knopfes ruhende Teil und zur angrenzenden Anordnung an die Eingabefläche vorgesehene Teil des Drehstellers sein.

Die Erfindung betrifft ferner die Verwendung der zuvor beschriebenen Bedienanordnung in einer ihrer Ausgestaltungen in einem Kraftfahrzeug. Beispielsweise ist die Bedienanordnung in einer Mittelkonsole des Kraftfahrzeugs angeordnet.

Die Erfindung betrifft Auswertverfahren für eine Bedienanordnung in einer der zuvor beschriebenen Ausgestaltungen, wobei das Auswertverfahren einen Berührdetektionsschritt umfasst, bei dem aus dem von den Mitteln zur Berührdetektion gewonnenen Signal eine Ortsbestimmung einer auf der Eingabefläche erfolgten Berührung durchgeführt wird und das Auswertverfahren einen Betätigungsidentifikationsschritt umfasst, bei dem anhand der Signale der Matrix von Kraftsensoren, beispielsweise durch Vergleich mit vorgegebenen Werten, wenigstens eine Betätigungskrafteinwirkung auf den Drehsteller identifiziert wird. Beispielsweise dient der Betätigungskraftidentifikationsschritt dazu, eine Betätigung von einer unbeabsichtigten Verdrehung durch zufällige Berührung zu unterscheiden. Es hat sich gezeigt, dass solche durch Betätigung bewirkte Einwirkungen anhand eines durch eine Matrix von wenigen Kraftsensoren definierten Kraftmusters leicht und zuverlässig detektierbar sind und zuverlässig von anderen Krafteinwirkungen, die ungewollt und zufällig sind, unterscheidbar sind. Dadurch kann die durch eine Betätigung bewirkte Verstellung des Drehstellers verifiziert werden und die Zuverlässigkeit der Stellungsauswertung des Drehstellers gesteigert werden.

Gemäß einer erfindungsgemäßen Ausgestaltung des Verfahrens ist die positive Detektion einer Betätigungskrafteinwirkung auf den Drehsteller einer neuen von der Betätigungskraft, beispielsweise von der Richtung und/oder dem Betrag der durch die Matrix der Kraftsensoren gemessenen Betätigungskraft, abhängigen Schaltfunktion oder Steuerfunktion zugeordnet. Beispielsweise ist vorgesehen, bei einer Betätigungskraft, die in einer zur Achse der Drehverstellung senkrechten Richtung erfolgt, dem Drehsteller eine zusätzliche Schaltfunktion oder Steuerfunktion zuzuordnen. Beispielsweise sind vier zueinander und zur Achse der Drehverstellung orthogonale Richtungen der Betätigungskraft jeweils eine Schaltfunktion oder Steuerfunktion zugeordnet, um dem Drehversteller neben der Drehfunktionalität die Funktionalität eines Joysticks zu verleihen. In einer anderen Ausgestaltung ist vorgesehen, dass bei einer Betätigungskraft, die in einer zur Achse der Drehverstellung parallelen Richtung erfolgt, dem Drehsteller eine zusätzliche Schaltfunktion oder Steuerfunktion zuzuordnen. Beispielsweise wird dem Drehsteller so eine zusätzliche Drückfunktionalität ("Push"-Funktionalität) verliehen.

Die Erfindung wird anhand der nachfolgenden Figuren näher erläutert. Die Figuren sind dabei nur beispielhaft zu verstehen und stellen lediglich eine bevorzugte Ausführungsvariante dar. Es zeigen:
- Fig. 1: eine Schnittansicht einer Ausführungsform der erfindungsgemäßen Bedienanordnung;
- Fig. 2: eine schematische Ansicht eines erfindungsgemäßen Verfahrensablauf.
- Fig. 3: eine Ansicht einer weiteren Ausführungsform eines erfindungsgemäßen Drehstellers der Bedienanordnung

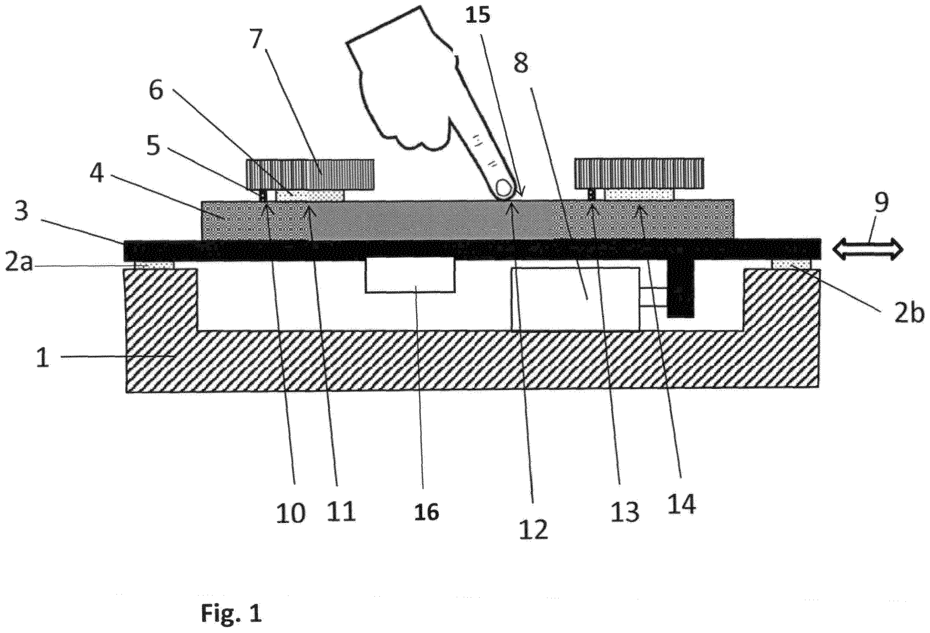

Figur 1 zeigt eine erste Ausführungsform der erfindungsgemäßen Bedienanordnung. Die Bedienanordnung umfasst erfindungsgemäß einen Träger 1. An dem Träger 1 ist ein Betätigungsteil 3, 4 welches eine Eingabefläche 15 definiert und Mittel 4 zur Detektion einer Berührung auf der Eingabefläche aufweist, beweglich befestigt. Im vorliegenden Fall handelt es sich um ein Touchscreen 4, also aus einer eine berührempfindliche Eingabefläche 15 definierenden, elektronischen Anzeige samt Mitteln zur Berührdetektion. Die nicht näher dargestellten Lagerungsmittel sind so ausgestaltet, dass eine Rückstellung des Betätigungsteils 3, 4 in eine in Figur 1 gezeigte Ruhestellung bewirkt wird. Eine Berührung der Eingabefläche 15, wie im Punkt 12 angedeutet, wird kapazitiv durch eine nicht dargestellte Elektrodenstruktur des Touchscreens 4 ortsauflösend detektiert, indem eine Matrix von die Eingabefläche erfassenden Messkapazitäten ausgewertet wird. Auf der dem Bediener zugewandten, die berührempfindliche Eingabefläche 15 definierenden äußersten, transparenten Schicht des Touchscreens 4 sind ferner mehrere Drehsteller 7 mit einem Betätigungsring zur Drehverstellung des Drehstellers 7 vorgesehen. Der Drehsteller 7 weist jeweils einen Sockel 6 auf, der mit der äußersten Schicht des Touchscreens 4 verklebt ist, so dass die Drehsteller 7 mit dem Betätigungsteil 3, 4 beweglich sind.

Die Drehsteller 7 decken einen Teil der Eingabefläche 15 des Touchscreens 4 ab, wobei die im Touchscreen 4 vorgesehene Sensorik zur Berührungserkennung (Berührsensorik) zur Stellungsdetektion des Drehstellers 7 genutzt werden kann. Nämlich ein sich mit dem Betätigungsring synchron verstellender Stellungsgeber 5 wirkt mit dem Touchscreen 4 insbesondere dessen Mitteln zur Berührungsdetektion zusammen, so dass die Stellung des Drehstellers 7 mittels der dem Touchscreen 4 zugehörigen Detektionsmitteln detektierbar ist. Hierbei handelt es sich um eine elektrisch leitfähigen Stellungsgeber 5, der abhängig von der Stellung des Drehstellers seiner Stellung und Bewegungsbahn entsprechend bestimmte Messkapazitäten des Touchscreens 4 beeinflusst, woraus die Stellungsinformation durch eine Auswerteinheit 16 ermittelbar ist und somit den Orten 10 bzw. 13 eine Stellung des betreffenden Drehstellers 7 zugeordnet wird. Im Drehsteller 7 insbesondere in dessen Betätigungsring kann ferner eine zusätzliche Elektrode integriert sein, um ferner auch eine Annäherung oder Berührung des Drehstellers 7 mittels der Berührsensorik des Touchscreens 4 detektieren zu können.

Am Träger 1 ist ein elektromagnetischer Aktor 8 befestigt. Dieser hat eine parallel zur Eingabefläche 15 parallel verlaufende Wirkrichtung, um das Betätigungsteil 3, 4 in dieser Richtung zur Erzeugung eines haptischen Feedbacks 9 schwingend anzutreiben. Zur Messung einer Betätigungskrafteinwirkung auf das Betätigungsteil 3, 4 und insbesondere die damit verbundenen Drehsteller 7 ist eine Matrix aus mehreren kapazitiv messenden Kraftsensoren 2a, 2b, von denen in Figur 1 zwei gezeigt sind, zwischen dem Träger 1 und dem Betätigungsteil 3, 4 vorgesehen. Die Kraftsensoren 2a, 2b sind so angeordnet und ausgerichtet, dass sie im Wesentlichen die senkrecht auf der Eingabefläche 15 stehende Komponente einer Betätigungskraft messen. Die Matrix von Kraftsensoren 2a, 2b ist elektrisch leitend mit der Auswerteinheit 16 verbunden. Somit ist die Auswerteinheit 16 in der Lage, durch Vergleich mit vorgegebenen Schwellenwerten eine ortsauflösende Detektion der Betätigungskrafteinwirkung durchzuführen und demnach den Ort der Betätigungskrafteinwirkung den Punkten 11 und 14 und damit den Drehstellern 7 zuzuordnen. Die Auswerteinheit 16 ist in der Lage, die durch die Berührdetektion des Touchscreens 4 gewonnene Ortsinformationen mit der aus der Betätigungskrafteinwirkung und durch die Matrix von Kraftsensoren 2a, 2b gewonnene Ortsinformation zu verifizieren. Wird beispielsweise aufgrund des Signals der Matrix von Kraftsensoren 2a, 2b ein Einwirkungsort einer Betätigungskraft dem Bereich eines der Drehsteller 7 zugeordnet, wird dies dadurch positiv bestätigt und damit verifiziert, dass keine Berührung in dem Bereich außerhalb des von den Drehstellern 7 abgedeckten Bereichs durch den Touchscreen 4 detektiert wird und umgekehrt. Bei wenigstens angenähertem Entsprechen der gemessenen Kraftmatrix mit einer vorgegebenen Matrix wird die dem jeweiligen Drehsteller 7 zugeordneten Betätigung, hier dem Drücken des Drehstellers 7, eine Schaltfunktion zugeordnet und nahezu zeitgleich ein haptisches Feedback mittels des Aktors 8 erzeugt.

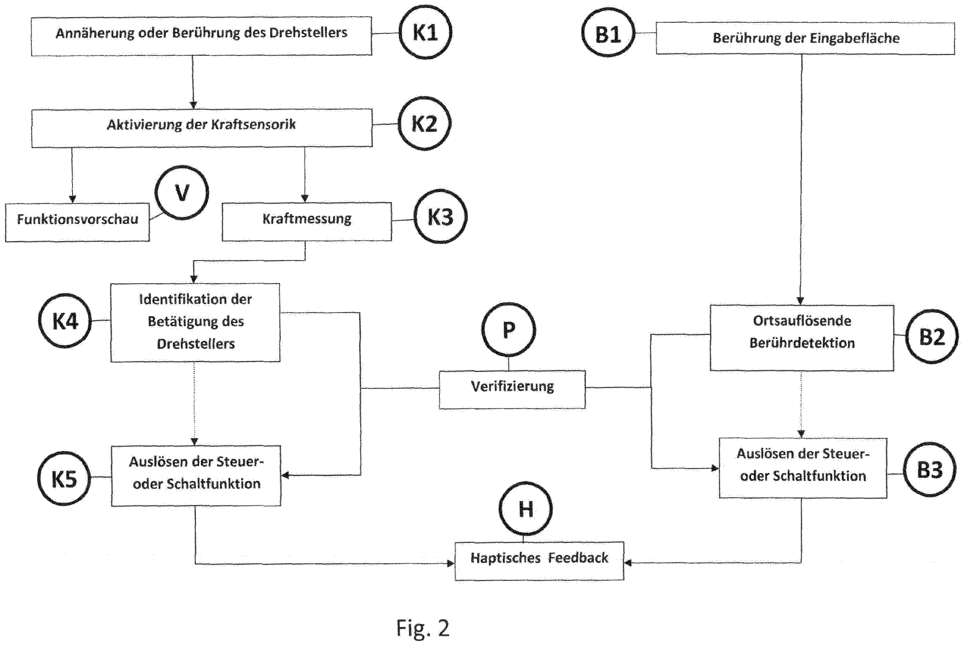

Dies und andere Aspekte werden am Ablaufdiagramm der Figur 2 nachfolgend erläutert. Im Schritt K1 wird eine Berührung oder Annäherung eines der beiden Drehsteller 7 aus Figur 1 mittels der jeweils im Drehsteller 7 integrierten Elektrode und den Mitteln zur kapazitiven, ortsauflösenden Berührdetektion des Touchscreens 4 detektiert. Darauf wird im Schritt K2 mittels der Kraftsensorik, d.h. die Matrix von Kraftsensoren 2a, 2b eine Kraftmessung durchgeführt. Gleichzeitig erfolgt im Schritt V auf der durch den Touchscreen 4 bereitgestellten Anzeige eine Funktionsvorschau der durch den Drehsteller 7, hier bei seinem Niederdrücken, erreichbaren Schaltfunktion. In Schritt K3 wird bei Überschreiten einer Mindestkrafteinwirkung eine Krafteinwirkung gemessen und in Schritt K4 dahingehend durch die Auswerteinheit 16, beispielsweise anhand der Differenz der Signalwerte der Sensoren 2a und 2b, ausgewertet, ob der sich daraus ergebende Ort der Einwirkung 11, 14 einem der Drehsteller 7 zugeordnet werden kann oder nicht. Ist dies der Fall wird in einer einfachen, durch den gestrichelten Pfeil ausgedrückten, Ausgestaltung die Schaltfunktion im Schritt K5 unmittelbar ausgelöst. In einer bevorzugten Ausgestaltung des Verfahrens wird dieses Ergebnis mit einem in den Schritten B1 und B2 gewonnenen Messergebnis der dem Touchscreen eigenen Berührsensorik im Schritt P verifiziert. Kann beispielsweise keine Berührung in Schritt B2 detektiert werden, wird dadurch die Betätigung des Drehstellers 7 im Schritt 4 verifiziert. Erst nach Verifizierung wird die Schaltfunktion in Schritt K5 ausgelöst und ein haptisches Feedback in Schritt H durch den Aktor 8 erzeugt. Besitzt der Drehsteller 7 keine Einrichtung, die eine Berühr- oder Annäherungserkennung erlaubt, entfällt der Schritt K1. Die Verifizierung im Schritt P erfolgt dann dadurch, dass im Schritt K3 eine Kraftschwelle überschritten wird, aber keine Berührung im Schritt B2 detektiert wird oder zumindest ausschließlich eine Berührung im Schritt B2 in unmittelbarer Umgebung (Fingerbreite) des Drehstellers 7 detektiert wird.

Im Folgenden wird eine Berührung durch den Bediener der Eingebfläche 15 außerhalb des durch die Drehsteller 7 bedeckten Bereichs und deren Detektion beschrieben. Erfolgt eine Berührung in Schritt B1 der Eingabefläche 15 im Bereich, der nicht von den Drehstellern 7 abgedeckt ist, wird diese durch die Berührsensorik des Touchscreens 4 in Schritt B2 detektiert und führt in einer durch den gestrichelten Pfeil dargestellten Ausgestaltung bei einer Übereinstimmung mit einem vorgegebenen Berührmuster zur Auslösung einer Schaltfunktion in Schritt B3 und es wird in Schritt H ein haptisches Feedback durch den Aktor 8 erzeugt.

Bevorzugt setzt das Auslösen der Schaltfunktion in Schritt B3 eine Verifizierung P der im Schritt B2 gemessenen Berührung durch das Messergebnis der in den Schritten K3 und K4 aus der Matrix von Kraftsensoren 2a, 2b, welche als Kraftsensorik bezeichnet wird, voraus. Konnte beispielsweise eine gleichzeitige Betätigungskraft keinem der Drehsteller 7 örtlich zugeordnet werden, wird somit damit die Berührung des Touchscreens 4 außerhalb des durch die Drehsteller 7 abgedeckten Bereichs verifiziert.

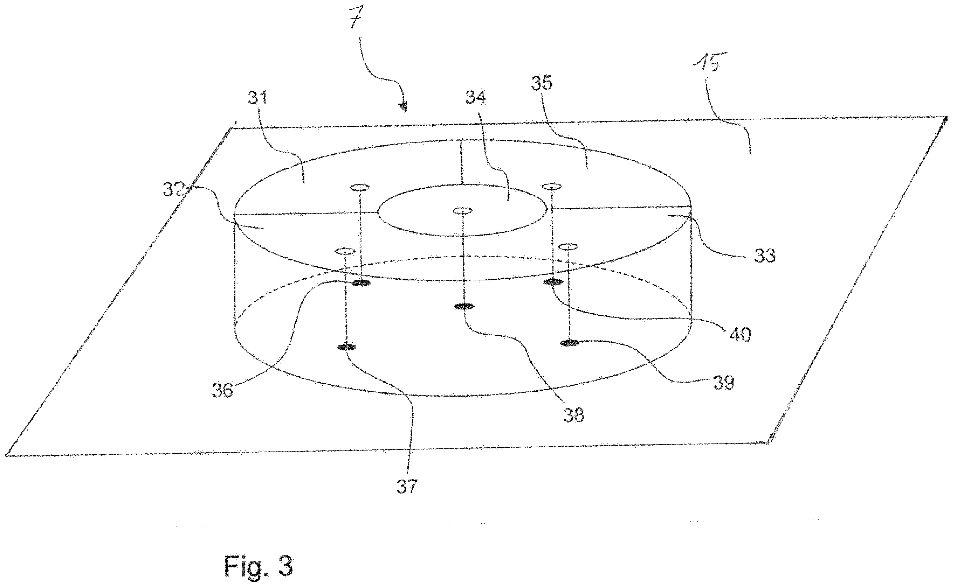

Figur 3 zeigt eine weitere Ausführungsform einer erfindungsgemäßen Bedienanordnung mit gegenüber der vorgenannten Ausgestaltung modifiziertem Drehsteller 7. Der Drehsteller 7 ist auf der dem Bediener zugewandten Seite der berührempfindlichen Eingabefläche 15 angeordnet. Der Drehsteller 7 definiert auf seiner Oberfläche mehrere Bereiche 31, 32, 33, 34, 35, die zur Berühr- oder Annäherungsdetektion geeignet sind, indem elektrisch leitende, zueinander isolierte Elektroden 31, 32, 33, 34 in der Oberfläche oder unter der Oberfläche des Drehstellers angeordnet sind Die Elektroden 31, 32, 33, 34, 35 sind jeweils elektrisch leitend mit einer zugehörigen Geberelektrode 36, 37, 38, 39, 40 verbunden. Eine Berührung der Bereiche 31, 32, 33, 34, 35 kann mittels der Geberelektroden 36, 37, 38, 39, 40 in Zusammenwirkung mit der der Eingabefläche 15 zugeordneten und in Figur 3 nicht gezeigten Berührsensorik in der Lage eine bereichsweise Auflösung eines Berührorts auf dem Drehsteller 7 zu detektieren. Beispielsweise können den unterschiedlichen BerührBereichen 31, 32, 33, 34, 35 unterschiedliche Funktionen zugewiesen werden. Beispielsweise kann bei Berührung des im Zentrum des Drehstellers 30 angeordneten Bereichs bei gleichzeitiger Verifizierung einer auf den Drehsteller 7 einwirkenden Betätigungskraft eine Drückfunktion (Push-Funktion) ausgelöst werden. Beispielsweise kann bei Berührung eines am äußeren Rand der Drehstellers 7 befindlichen Bereichs 31, 32, 33, 35 bei gleichzeitiger Verifizierung durch die Kraftsensorik eine betätigungsrichtungsabhängige Schaltfunktion ausgelöst werden, so dass der durch die Kraftsensorik verifizierten Joystickfunktion ihre richtungsspezifische Funktionalität durch den spezifischen Berührbereich zugeordnet wird. Beispielsweise dient die bereichsweise Auflösung der Berührung der Speizifizierung der Schaltfunktion des Drehstellers 7. Liegt der Berührort in einem Bereich um das geometrische Zentrum des Drehstellers 7 wird eine Push-Funktion ausgelöst. Liegt der Berührort beispielsweise außerhalb eines das Zentrum umgebenden Bereichs des Drehstellers 7 wird eine richtungsabhängige Funktion ausgelöst.

## Patentansprüche

1. Bedienanordnung aus einem Träger (1), einem gegenüber dem Träger (1) beweglich und in eine Ruhestellung rückstellend gelagerten Betätigungsteil (3, 4), welches eine Eingabefläche (15) definiert und Mittel (4) zur Detektion einer auf der Eingabefläche (15) erfolgenden Berührung aufweist, aus einer Matrix von Kraftsensoren (2a, 2b) zwischen dem Träger (1) und dem Betätigungsteil (3, 4) zur Messung einer auf das Betätigungsteil (3, 4) wirkenden Betätigungskraft und aus einer Auswerteinheit (16), die ausgelegt ist, aus dem von den Mitteln (4) zur Berührdetektion gewonnenen Signal eine Ortsbestimmung einer auf der Eingabefläche (15) erfolgten Berührung durchzuführen, **dadurch gekennzeichnet, dass** ein relativ zur Eingabefläche (15) um eine Achse drehbeweglich gelagerter Drehsteller (7) vorgesehen ist, dass die Auswerteinheit (16) ferner ausgelegt ist, anhand der Signale der Matrix von Kraftsensoren (2a, 2b) wenigstens eine Betätigungskrafteinwirkung auf den Drehsteller (7) zu identifizieren und dass bei einer positiven Detektion einer Betätigungskrafteinwirkung auf den Drehsteller (7) und bei einer Betätigungskraft, die in einer zur Achse der Drehverstellung parallelen Richtung erfolgt, dem Drehsteller eine Schalt- oder Steuerfunktion zugeordnet wird-.

2. Bedienanordnung gemäß Anspruch 1, wobei die Mittel (4) zur Berührdetektion ausgelegt sind, eine Berührung kapazitiv und/oder resistiv zu detektieren.

3. Bedienanordnung gemäß einem der vorhergehenden Ansprüche, wobei die Mittel (4) zur Berührdetektion ausgelegt sind, eine Annäherung und/oder Berührung des Drehstellers zu detektieren.

4. Bedienanordnung gemäß einem der vorhergehenden Ansprüche, wobei die Mittel (4) zur Berührdetektion ausgelegt sind, eine Annäherung und/oder Berührung des Drehstellers orts- oder bereichsaufgelöst zu detektieren.

5. Bedienanordnung gemäß einem der vorhergehenden Ansprüche, ferner aufweisend einen Aktor (8) zur Stoß- oder Schwingungsanregung des Betätigungsteils (3, 4) relativ zu dem Träger (1), um ein haptisches Feedback zu erzeugen, insbesondere sofern eine Betätigungskrafteinwirkung auf den Drehsteller (7) positiv identifiziert wird.

6. Bedienanordnung gemäß einem der vorhergehenden Ansprüche, wobei der Aktor (8) ausgelegt ist, eine Stoß- oder Schwingungsanregung in einer zur Eingabefläche (15) parallelen Richtung zu bewirken.

7. Bedienanordnung gemäß einem der vorhergehenden Ansprüche, wobei die Auswerteinheit (16) ausgelegt ist, die Berührdetektion auf der Eingabefläche (15) anhand der Signale der Matrix von Kraftsensoren zu verifizieren und/oder umgekehrt.

8. Bedienanordnung gemäß einem der vorhergehenden Ansprüche, wobei die Mittel (4) zur Berührdetektion ausgelegt sind, eine Stellung und/oder Verstellung des Drehstellers (7) zu detektieren.

9. Bedienanordnung gemäß einem der vorhergehenden Ansprüche, welche ferner eine Anzeige (4) aufweist, und die Auswerteinheit (16) ausgelegt ist, einen Anzeigeinhalt im Falle einer Identifikation einer Betätigungskrafteinwirkung auf den Drehsteller (7) zu wechseln.

10. Bedienanordnung gemäß einem der vorhergehenden Ansprüche, wobei das Betätigungsteil (3, 4) eine äußere die Eingabefläche (15) definierende, bevorzugt transparente, Schicht aufweist, die mit einem Sockel (6) des Drehstellers (7) einstückig ausgebildet ist oder mit dem Sockel (6) kraftschlüssig und/oder stoffschlüssig und/oder formschlüssig verbunden ist.

11. Verwendung der Bedienanordnung gemäß einem der vorhergehenden Ansprüche in einem Kraftfahrzeug.

12. Auswertverfahren für eine Bedienanordnung aus einem Träger, einem gegenüber dem Träger beweglich und in eine Ruhestellung rückstellend gelagerten Betätigungsteil, welches eine Eingabefläche definiert und Mittel zur Berührdetektion auf der Eingabefläche aufweist, einer Matrix von Kraftsensoren zwischen dem Träger und dem Betätigungsteil zur Messung einer auf das Betätigungsteil wirkenden Betätigungskraft und einer Auswerteinheit, wobei das Auswertverfahren einen Berührdetektionsschritt umfasst, bei dem aus dem von den Mitteln zur Berührdetektion gewonnenen Signal eine Ortsbestimmung einer auf der Eingabefläche erfolgten Berührung durchgeführt wird und **dadurch gekennzeichnet, dass** die Bedienanordnung wenigstens einen auf der Eingabefläche angeordneten und relativ zur Eingabefläche drehbeweglich gelagerten Drehsteller aufweist und dass das Auswertverfahren einen Betätigungsidentifikationsschritt umfasst, bei dem anhand der Signale der Matrix von Kraftsensoren wenigstens eine Betätigungskrafteinwirkung auf den Drehsteller identifiziert wird, und dass bei einer positiven Detektion einer Betätigungskrafteinwirkung auf den Drehsteller und bei einer Betätigungskraft, die in einer zur Achse der Drehverstellung parallelen Richtung erfolgt, dem Drehsteller eine Schalt- oder Steuerfunktion zugeordnet wird.

## Claims

1. Operating arrangement comprising a carrier (1), an actuation part (3, 4) which is mounted so as to be movable with respect to the carrier (1) and to return to a rest position, which actuation part defines an input surface (15) and has means (4) for detecting a touch on the input surface (15), a matrix of force sensors (2a, 2b) between the carrier (1) and the actuation part (3, 4) for measuring an actuation force acting on the actuation part (3, 4), and an evaluation unit (16) which is designed to determine the location of a touch on the input surface (15) from the signal obtained from the touch detection means (4), **characterized in that** a rotary regulator (7) which is mounted so as to be rotationally movable about an axis relative to the input surface (15) is provided, **in that** the evaluation unit (16) is also designed to identify at least one actuation force effect on the rotary regulator (7) on the basis of the signals from the matrix of force sensors (2a, 2b), and **in that** a switching or control function is assigned to the rotary regulator if an actuation force effect on the rotary regulator (7) is positively detected and in the case of an actuation force which is effected in a direction parallel to the axis of the rotational adjustment.

2. Operating arrangement according to Claim 1, wherein the touch detection means (4) are designed to capacitively and/or resistively detect a touch.

3. Operating arrangement according to one of the preceding claims, wherein the touch detection means (4) are designed to detect when the rotary regulator is approached and/or touched.

4. Operating arrangement according to one of the preceding claims, wherein the touch detection means (4) are designed to detect when the rotary regulator is approached and/or touched in a spatially resolved or regionally resolved manner.

5. Operating arrangement according to one of the preceding claims, also having an actuator (8) for the impulse or vibration excitation of the actuation part (3, 4) relative to the carrier (1) in order to produce haptic feedback, in particular if an actuation force effect on the rotary regulator (7) is positively identified.

6. Operating arrangement according to one of the preceding claims, wherein the actuator (8) is designed to cause impulse or vibration excitation in a direction parallel to the input surface (15).

7. Operating arrangement according to one of the preceding claims, wherein the evaluation unit (16) is designed to verify the touch detection on the input surface (15) on the basis of the signals from the matrix of force sensors and/or vice versa.

8. Operating arrangement according to one of the preceding claims, wherein the touch detection means (4) are designed to detect a position and/or adjustment of the rotary regulator (7).

9. Operating arrangement according to one of the preceding claims, which also has a display (4), and the evaluation unit (16) is designed to change a display content if an actuation force effect on the rotary regulator (7) is identified.

10. Operating arrangement according to one of the preceding claims, wherein the actuation part (3, 4) has an outer layer, preferably a transparent layer, which defines the input surface (15) and is formed in one part with a base (6) of the rotary regulator (7) or is connected to the base (6) in a force-fitting and/or firmly bonded and/or form-fitting manner.

11. Use of the operating arrangement according to one of the preceding claims in a motor vehicle.

12. Evaluation method for an operating arrangement comprising a carrier, an actuation part which is mounted so as to be movable with respect to the carrier and to return to a rest position, which actuation part defines an input surface and has means for detecting touch on the input surface, a matrix of force sensors between the carrier and the actuation part for measuring an actuation force acting on the actuation part, and an evaluation unit, wherein the evaluation method comprises a touch detection step in which the location of a touch on the input surface is determined from the signal obtained from the touch detection means, and **characterized in that** the operating arrangement has at least one rotary regulator which is arranged on the input surface and is mounted so as to be rotationally movable relative to the input surface, and **in that** the evaluation method comprises an actuation identification step in which at least one actuation force effect on the rotary regulator is identified on the basis of the signals from the matrix of force sensors, and **in that** a switching or control function is assigned to the rotary regulator if an actuation force effect on the rotary regulator is positively detected and in the case of an actuation force which is effected in a direction parallel to the axis of the rotational adjustment.

## Revendications

1. Agencement de commande composé d'un support (1), d'une pièce d'actionnement (3, 4) montée mobile par rapport au support (1) et de manière repositionnable dans une position de repos, définissant une surface d'entrée (15) et présentant des moyens (4) pour détecter un contact effectué sur la surface d'entrée (15), d'un réseau de capteurs de force (2a, 2b) entre le support (1) et la pièce d'actionnement (3, 4) pour mesurer une force d'actionnement agissant sur la pièce d'actionnement (3, 4), et d'une unité d'évaluation (16) conçue pour exécuter, à partir du signal obtenu par les moyens (4) de détection de contact, une détermination de position d'un contact effectué sur la surface d'entrée (15), **caractérisé en ce qu'**il est prévu un actionneur rotatif (7), monté mobile en rotation autour d'un axe par rapport à la surface d'entrée (15), **en ce que** l'unité d'évaluation (16) est en outre conçue pour identifier, à partir des signaux du réseau de capteurs de force (2a, 2b), au moins une action de force d'actionnement sur l'actionneur rotatif (7), et **en ce qu'**en cas de détection positive d'une action de force d'actionnement sur l'actionneur rotatif (7) et en cas d'une force d'actionnement agissant dans une direction parallèle à l'axe du réglage rotatif, une fonction de commutation ou de commande est associée à l'actionneur rotatif.

2. Agencement de commande selon la revendication 1, dans lequel les moyens (4) de détection de contact sont conçus pour détecter un contact de manière capacitive et/ou résistive.

3. Agencement de commande selon l'une quelconque des revendications précédentes, dans lequel les moyens (4) de détection de contact sont conçus pour détecter une approche et/ou un contact de l'actionneur rotatif.

4. Agencement de commande selon l'une quelconque des revendications précédentes, dans lequel les moyens (4) de détection de contact sont conçus pour détecter une approche et/ou un contact de l'actionneur rotatif à résolution spatiale ou locale.

5. Agencement de commande selon l'une quelconque des revendications précédentes, comprenant en outre un actionneur (8) pour une excitation par choc ou par oscillation de la pièce d'actionnement (3, 4) par rapport au support (1) afin de produire un retour haptique, en particulier dans la mesure où une action de force d'actionnement sur l'actionneur rotatif (7) est identifiée positivement.

6. Agencement de commande selon l'une quelconque des revendications précédentes, dans lequel l'actionneur (8) est conçu pour provoquer une excitation par choc ou par oscillation dans une direction parallèle à la surface d'entrée (15).

7. Agencement de commande selon l'une quelconque des revendications précédentes, dans lequel l'unité d'évaluation (16) est conçue pour vérifier la détection de contact sur la surface d'entrée (15) à l'aide des signaux provenant du réseau de capteurs de force, et/ou vice versa.

8. Agencement de commande selon l'une quelconque des revendications précédentes, dans lequel les moyens (4) de détection de contact sont conçus pour détecter une position et/ou un réglage de l'actionneur rotatif (7).

9. Agencement de commande selon l'une quelconque des revendications précédentes, comprenant en outre un affichage (4), et l'unité d'évaluation (16) étant conçue pour modifier un contenu d'affichage en cas d'identification d'une action de force d'actionnement sur l'actionneur rotatif (7).

10. Agencement de commande selon l'une quelconque des revendications précédentes, dans lequel la pièce d'actionnement (3, 4) présente une couche extérieure, de préférence transparente, définissant la surface d'entrée (15) qui est réalisée d'une seule pièce avec une base (6) de l'actionneur rotatif (7) ou est reliée à la base (6) par adhérence et/ou par liaison de matière et/ou par complémentarité de forme.

11. Utilisation de l'agencement de commande selon l'une quelconque des revendications précédentes dans un véhicule automobile.

12. Procédé d'évaluation pour un agencement de commande composé d'un support, d'une pièce d'actionnement montée mobile par rapport au support et de manière repositionnable dans une position de repos, définissant une surface d'entrée et présentant des moyens pour détecter un contact effectué sur la surface d'entrée, d'un réseau de capteurs de force entre le support et la pièce d'actionnement pour mesurer une force d'actionnement agissant sur la pièce d'actionnement, et d'une unité d'évaluation, le procédé d'évaluation comprenant une étape de détection de contact dans laquelle une détermination de position est effectuée à partir du signal obtenu par les moyens de détection de contact d'un contact effectué sur la surface d'entrée, et **caractérisé en ce que** l'agencement de commande présente au moins un actionneur rotatif disposé sur la surface d'entrée et monté mobile en rotation par rapport à la surface d'entrée, et **en ce que** le procédé d'évaluation comprend une étape d'identification d'actionnement dans laquelle, à l'aide des signaux provenant du réseau de capteurs de force, au moins une action de force d'actionnement sur l'actionneur rotatif est identifiée, et **en ce qu'**en cas de détection positive d'une action de force d'actionnement sur l'actionneur rotatif et en cas d'une force d'actionnement agissant dans une direction parallèle à l'axe du réglage de rotation, une fonction de commutation ou de commande est associée à l'actionneur rotatif.
